# EUROPÄISCHE PATENTSCHRIFT

(11) **EP 1 232 081 B1**
(45) Veröffentlichungstag und Bekanntmachung des Hinweises auf die Patenterteilung: **11.02.2004**
(21) Anmeldenummer: 00974523.3
(22) Anmeldetag: 11.11.2000
(51) Int. Cl.: B60T 8/36, F16K 31/06, H01F 7/16

(54) **ELEKTROMAGNETVENTIL**
ELECTROMAGNET VALVE
VANNE ELECTROMAGNETIQUE

(30) Priorität: 16.11.1999 DE 19954951; 07.12.1999 DE 19958823; 04.04.2000 DE 10016599
(43) Veröffentlichungstag der Anmeldung: 21.08.2002
(73) Patentinhaber: Continental Teves AG & Co. oHG, 60488 Frankfurt (DE)
(72) Erfinder: GOOSSENS, Andre, F., L., B-2840 Rumst (BE); VAN HIMME, Luc, B-9080 Zaffelare (BE)
(86) Internationale Anmeldenummer: PCT/EP2000/011178
(87) Internationale Veröffentlichungsnummer: WO 2001/036243

(56) Entgegenhaltungen:
- WO-A-93/08051
- DE-A- 4 244 444
- DE-A- 19 502 671
- DE-U- 29 723 707
- FR-A- 2 626 711
- US-A- 3 653 630

## Beschreibung

Die Erfindung betrifft ein Elektromagnetventil nach dem Oberbegriff des Patentanspruchs 1.

Aus der DE 197 00 980 A1 ist bereits ein Elektromagnetventil bekannt geworden, das infolge des gewählten einfachen Aufbaus ausschließlich die Funktion eines bistabil schaltenden Zweistellungsventils erfüllen kann.

Es sind aber auch bereits proportionalisierte Elektromagnetventile bekannt, die allerdings einen beträchtlichen regelungstechnischen als auch konstruktiven Aufwand erfordern. Ein Elektromagnetventil dieser Bauart wird in der DE 196 538 95 A1 beschrieben.

In der gattungsbildenden Schrift DE 42 44 444 A1 ist ein Elektromagnetventil beschrieben, das zwischen dem Magnetkern und dem Magnetanker ein Federelement mit einer nicht linearen Kennlinie aufweist. Die Federkennlinie verläuft steiler als die Hubkraftkennlinie des Magnetankers, wobei beide Kennlinien mit dem Erreichen des kleinsten Luftspalts zwischen dem Magnetanker und dem Magnetkern jeweils ihren Höchstwert erreichen.

Aus der FR2626711A ist ein Elektromagnet bekannt, der zwischen einem Magnetanker und einem Magnetkern eine Rückstellfeder und eine biegeweiche Scheibe aufweist. Die Scheibe ist aus einem nicht magnetischen Material, um nach der elektromagnetischen Erregung infolge von Remanenz das Anhaften des Magnetankers am Magnetkern zu verhindern. Daher ist die Scheibe über nahezu den gesamten Magnetankerhub wirkungslos und erzeugt auch im letzten Teil des Magnetankerhubs keine die Magnetkraft schwächende Gegenkraft.

Auch aus der US 3,653,630 ist bereits die Anordnung einer nicht magnetischen Federscheibe zwischen dem Magnetanker und dem Magnetkern bekannt, um die durch Remanenz hervorgerufene Kraft zwischen dem Magnetkern und dem Magnetanker zu überwinden. Die Federscheibe ist daher zwecks eines ungehinderten Magnetankerhubs vom Magnetanker beabstandet. Unter der Voraussetzung, dass der Magnetanker die Federscheibe in Richtung des Magnetkerns verformt, erzeugt die Federscheibe eine der Remanenz entgegenwirkende Lösekraft, um den Magnetanker wieder in seine ursprüngliche Ruheposition zu beschleunigen.

Daher ist es die Aufgabe der vorliegenden Erfindung, ein Elektromagnetventil der gattungsbildenden Art im Aufbau und bezüglich des regelungstechnischen Betriebs zu vereinfachen.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung werden im nachfolgenden anhand mehrerer Zeichnungen erläutert.

Es zeigen
- Fig. 1: einen Längsschnitt durch ein in der Grundstellung stromlos geschlossenes Elektromagnetventil gemäß dem Stand der Technik,
- Fig. 1a: einen Kennlinienverlauf für das Elektromagnetventil nach Fig. 1,
- Fig. 2: ein modifizierter Kennlinienverlauf nach Aufnahme von erfindungswesentlichen Merkmalen im Elektromagnetventil nach Fig. 1,
- Fig. 2a: eine Vergrößerung der erfindungswesentlichen Einzelheiten für die Verwendung im Elektromagnetventil nach Figur 1,
- Fig. 2b: eine alternative Ausführung der in Fig. 2a gezeigten, erfindungswesentlichen Merkmale, die im Elektromagnetventil nach Figur 1 einfach verwirklicht werden können,
- Fig. 3: einen Längsschnitt durch ein in Grundstellung stromlos geöffnetes Elektromagnetventil,
- Fig. 3a: einen Kennlinienverlauf für das Elektromagnetventil nach Fig. 3.

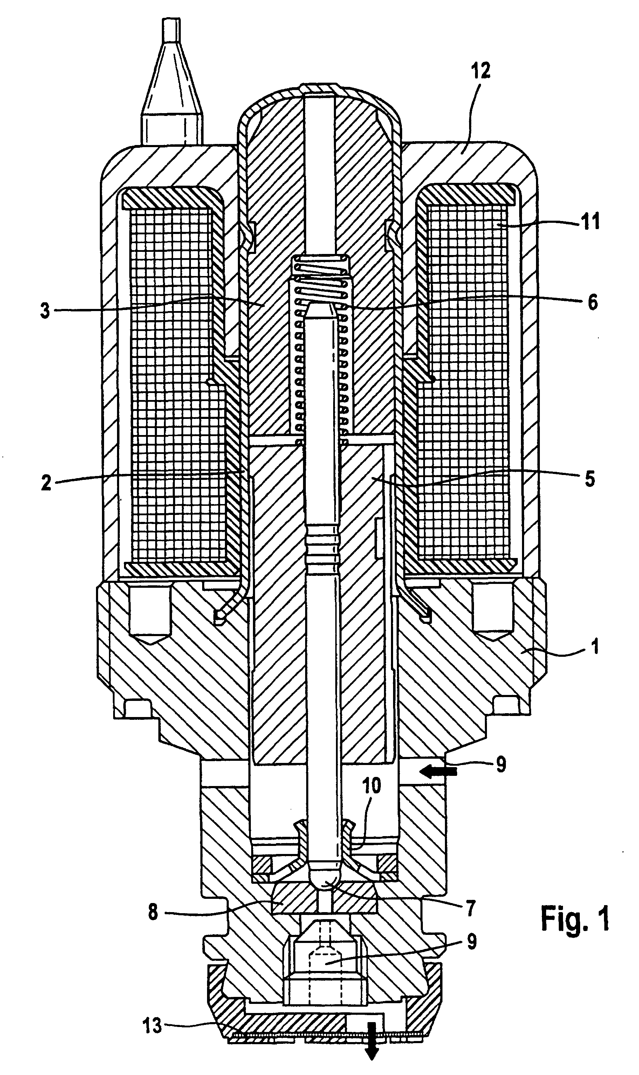

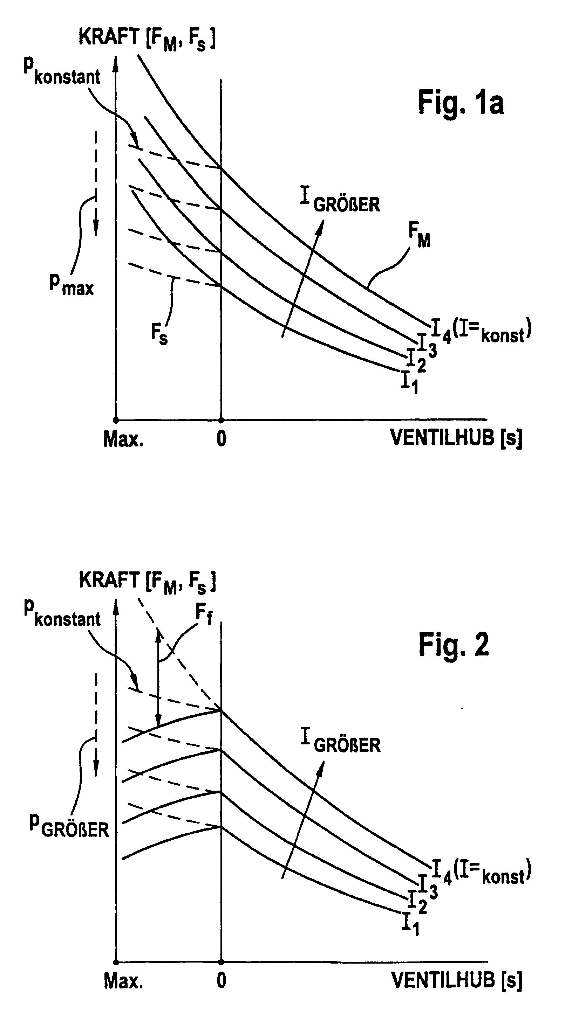

Die Fig. 1 zeigt ein in Grundstellung stromlos geschlossenes Elektromagnetventil gemäß dem Stand der Technik, dessen Ventilgehäuse 1 beispielhaft in Patronenbauweise ausgeführt ist. Das Oberteil des Ventilgehäuses 1 ist als dünnwandige Ventilhülse 2 gestaltet, in deren domförmig geschlossenem Bereich ein zylinderförmiger Magnetkern 3 befestigt ist. Unterhalb des Magnetkerns 3 befindet sich der kolbenförmige Magnetanker 5. Der Magnetkern 3 nimmt innerhalb einer Stufenbohrung eine an sich bekannte Feder 6 mit linearem Kennlinienverlauf auf, die sich als Schraubendruckfeder mit ihrem einen Windungsende auf die Stirnfläche des Magnetankers 5 erstreckt. Der Magnetanker 5 ist folglich unter der Wirkung der Feder 6 mit dem stößelförmigen Ventilschließglied 7 gegen einen Ventilsitz 8 im Ventilgehäuse 1 gepresst, wodurch ein das Ventilgehäuse 1 in Horizontal- und Vertikalrichtung durchdringender Druckmittelkanal 9 in der abbildungsgemäßen Ventilgrundstellung unterbrochen ist. Das stößelförmige Ventilschließglied 7 ist vorzugsweise mittels einer Presspassung im Magnetanker 5 fixiert und an seinem dem Ventilsitz 8 zugewandten Endabschnitt 8 in einer Führungshülse 10 zentriert, die konzentrisch zum Ventilsitz 8 im Ventilgehäuse 1 fixiert ist.

Durch eine auf dem Ventilgehäuse 1 angebrachte Ventilspule 11 und einen die Ventilspule 11 teilweise umschließenden Jochring 12 lässt sich durch eine Erregung der Ventilspule 11 der Magnetkreis schließen und der Magnetanker 5 in Richtung auf den Magnetkern 3 bewegen.

Damit ist zunächst die Wirkungsweise eines aus dem Stand der Technik bekannten stromlos geschlossenen Elektromagnetventils beschrieben. Bei diesem Elektromagnetventil muss die Vorspannung der Feder 6 dem maximalen hydraulischen Eingangsdruck im Druckmittelkanal 9 entsprechen, da der Eingangsdruck in der Bohrung des Ventilsitzes 8 das Ventilschließglied 7 beaufschlagt. Ein solches Ventil verhält sich bistabil, d.h. es ist entweder geschlossen oder geöffnet. Eine Zwischenposition ist nicht möglich. Dies wird aus dem nachfolgenden Kennlinienverlauf in Fig. 1a deutlich.

In dem Diagramm nach Fig. 1a ist eine hyperbelförmige Kurvenschar für verschiedene Magnetkraftkennlinien FM mit jeweils konstantem Ventilspulenstrom I als Funktion des Ventilhubes s aufgetragen. Ferner ist eine Stößelkraftkurvenschar Fs mit jeweils konstantem Druck p als Funktion des Ventilhubes s aufgetragen. Der Verlauf dieser Stößelkraftkurvenschar Fs ist durch die Gestaltung des Ventilsitzes 8 und einer bei Elektromagnetventilen üblichen Blendenanordnung, die sich in Serie zum Ventilsitz 8 befindet, vorgegeben und demnach nur durch konstruktive Veränderungen im Bereich des Ventilsitzes 8 als auch im Bereich des Ventilschließgliedes 7 beeinflussbar. Entsprechend der gewählten Darstellung sind die Kräfte FM, Fs als auch die hydraulischen Drücke p entlang der Ordinate sowie der Ventilhub s entlang der Abszisse dargestellt. Zu beachten ist hierbei, dass gemäß der gewählten Darstellung der hydraulische Druck p in Richtung des Schnittpunktes der Ordinate mit der Abszisse zunehmend ist, so dass in der Ventilschließstellung der maximale Druck p dem Ventileingangsdruck im Druckmittelkanal 9 entspricht. Weitere Schnittpunkte ergeben sich zwischen den nahezu linearen Druckkurven p und Kennlinien des Ventilspulenstrom I in der Ventilschließstellung (Ventilhub s = 0).

Aus dem Diagramm nach Fig. 1a ist ersichtlich, dass im Arbeitsbereich des Magnetankers 5 infolge der Hyperbelfunktion der Stromkennlinien mit zunehmendem Ventilspulenstrom I jeweils ein Überschuss der Magnetkraft FM gegenüber der aus dem Druck p resultierenden Druckkraft wirksam ist, wenn das Ventilschließglied 7 vom Ventilsitz 8 abhebt, da infolge der auf den Magnetkern 3 gerichteten Magnetankerbewegung sich der Luftspalt zwischen Magnetkern 3 und Magnetanker 5 verkleinert. Der Magnetkraftüberschuss bewegt den Magnetanker 5 zwangsläufig sehr rasch in die voll geöffnete Ventilposition (Ventilhub s = Max.). Folglich ist die gewünschte Zwischenposition infolge des Magnetkraftüberschusses für das eingangs beschriebene Elektromagnetventil nach Fig. 1 nicht möglich. Der Magnetkraftüberschuss FM ist im Diagramm nach Fig. 1a jeweils sehr anschaulich durch die Divergenz der Druckkennlinie p zur Kennlinie des Ventilspulenstroms I in Abhängigkeit des Ventilhubs s verdeutlicht.

Erst durch die erfindungsgemäße Anordnung eines Federelementes 4 im Elektromagnetventil nach Figur 1, im Luftspalt zwischen dem Magnetanker 5 und dem Magnetkern 3, wird die Magnetkraft FM virtuell geschwächt, wozu die Charakteristik des Federelementes 4 derart ausgelegt ist, dass die resultierende Magnetkraft FM bei Annäherung des Magnetankers 5 an den Magnetkern 3 und damit scheinbar mit zunehmendem Ventilhub s im Ventilöffnungssinn schneller abnimmt als die aus dem hydraulischen Druck p am Ventilschließglied 7 resultierende Stößelkraft FS, die im wesentlichen durch die hydraulische Beaufschlagung des Stößels festgelegt ist. Hierdurch kann entweder mittels geeigneter elektrischer Stromregelung in der Ventilspule 11 bei jeweils konstantem Druck p oder aber durch Regelung des Drucks p bei jeweils konstantem Ventilspulenstrom I erfindungsgemäß jede beliebige Ventilhubposition zwischen den bistabilen Grenzlagen (s = 0, s = Max.) eingesteuert werden. Man hat damit die Möglichkeit, das Elektromagnetventil nicht nur als 2-Wegeventil, sondern auch im Analogbetrieb als Volumenstromregelventil zu betreiben.

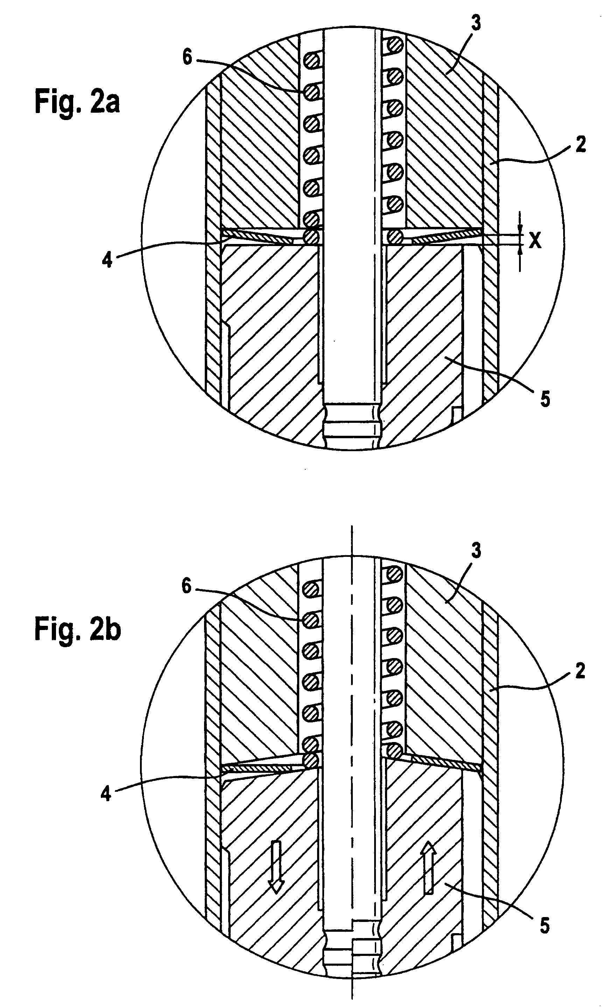

Diese mit der Erfindung angestrebte Ventileigenschaft ist abweichend vom Diagramm nach Fig. 1a nunmehr im Diagramm nach Fig. 2 dargestellt, das sich dahingehend von Fig. 1a unterscheidet, dass die Kennlinien für die jeweils angenommenen Ventilspulenströme I1 bis I4 zu Beginn der Ventilöffnung (s > 0), d.h., wenn sich der Magnetanker 5 zum Magnetkern 3 bewegt, nicht mehr entsprechend der ursprünglichen Hyperbelfunktion ansteigen, sondern infolge der Kraftwirkung Ff des Federelementes 4 degressiv im Bereich des aktiven Ventilhubs s verlaufen.

Die nachfolgenden Ausführungsbeispiele gemäß den Fig. 2a und 2b veranschaulichen die Erfindung anhand der gezeigten konstruktiven Einzelmerkmale für ein in Grundstellung nicht erregtes, geschlossenes Elektromagnetventil, basierend auf dem ursprünglichen Aufbau des Ventils nach Fig. 1.

Die Fig. 2a zeigt eine vergrößerte, teilweise Darstellung des Magnetkerns 3 und des Magnetankers 5 mit den entsprechenden konstruktiven Veränderungen gegenüber dem Elektromagnetventil nach Fig. 1. Im einzelnen lässt sich unter Berücksichtigung der Erläuterungen zu Fig. 1 nunmehr aus der Fig. 2a die elektromagnetisch nicht erregte, geschlossene Ventilschaltstellung deutlich erkennen, in der das tellerförmige Federelement 4 mit seinem Außenrand an der geraden, horizontal verlaufenden Magnetkernstirnfläche anliegt, während der Innenrand des Federelementes 4 im Bereich der die Feder 6 aufweisenden Öffnung sich an der geraden, horizontal verlaufenden Stirnfläche des Magnetankers 5 abstützt. Der zwischen den parallelen Stirnflächen des Magnetankers 5 und des Magnetkerns 3 bestehende Axialabstand entspricht somit nach Berücksichtigung der Dicke des Federelementes 4 dem maximalen Magnetankerhub X. Das Federelement 4 besteht vorzugsweise aus einem den Magnetfluss leitenden Material, um den effektiven Arbeitsluftspalt nicht unnötig zu vergrößert, so dass vorteilhafterweise auch keine Abschwächung der Magnetkraft eintritt. Bei elektromagnetischer Erregung wird das Federelement 4 elastisch zusammengepreßt und vollflächig an den geraden Stirnflächen des Magnetkerns 3 und des Magnetankers 5 angelegt. Infolge einer der Bewegung des Magnetankers 5 entgegen gerichteten Federkraft Ff des Federelements 4 kann überdies der Magnetanker 5 abgebremst werden, bevor er das Federelement 4 vollflächig gegen die Stirnfläche des Magnetkerns 3 drückt, so dass sich u.a. auch bei Bedarf das Schaltgeräusch des Elektromagneten vermindern lässt. Durch die Vorspannkraft des Federelementes 4 wird überdies nach Abschluss der elektromagnetischen Erregung eine mögliche schnelle Rückstellung des Magnetankers 5 aus der Endlage am Magnetkern 3 bewirkt, da durch die Rückstelltendenz des Federelementes 4 das durch Remanenz normalerweise hervorgerufene sog. Magnetankerkleben am Magnetkern unterbrochen wird.

In der Fig. 2b ist das Federelement 4 aus herstelltechnischen Gründen vereinfacht als ebene Platte bzw. Scheibe ausgeführt, die zwischen den schrägen Stirnflächen des Magnetankers 5 und des Magnetkerns 3 eingespannt ist. Im vorliegenden Ausführungsbeispiel ist die Stirnfläche des Magnetkerns 3 in Richtung des Federelementes 4 konkav bzw. trichterförmig erweitert, während die Stirnfläche des Magnetankers 5 unter dem gleichen Neigungswinkel wie am Magnetkern 3 konisch zuläuft und damit konvex ist. Ein Vertauschen der Stirnflächengeometrie ist denkbar. Hierdurch ergibt sich gleichfalls die von einer Tellerfeder bereits bekannte und für die Erfindung vorteilhafte progressive Federkennlinie für das ebene, plattenförmige Federelement 4. In der linken Bildhälfte befindet sich der Magnetanker 5 in nicht erregter Stellung. Die rechte Bildhälfte veranschaulicht die vollflächige Anlage und maximale Vorspannung des Federelementes 4 in der elektromagnetisch erregten Schaltstellung des Magnetankers 5.

Damit ausgehend von dem Elektromagnetventil nach Figur 1 unter Anwendung der in Fig. 2a, 2b beschriebenen Merkmale das in Grundstellung geschlossene Elektromagnetventil mit den Merkmalen nach Fig.2a, 2b einwandfrei funktionieren kann, erfolgt die Zuströmung und damit die Druckbeaufschlagung des Ventilschließgliedes 7 abweichend von der Darstellung nach Figur 1 von unten, d.h. stromaufwärts des Ventilschließgliedes 7 über den den vertikalen Druckmittelkanal 9 abdeckenden Plattenfilter 13 in Richtung auf die Stirnfläche des Ventilschließgliedes 7 und damit über den freigebbaren Ringquerschnitt und über die in der Führungshülse 10 gelegenen Durchgangsöffnungen in Richtung der das Ventilgehäuse 1 durchquerenden Druckmittelkanäle 9.

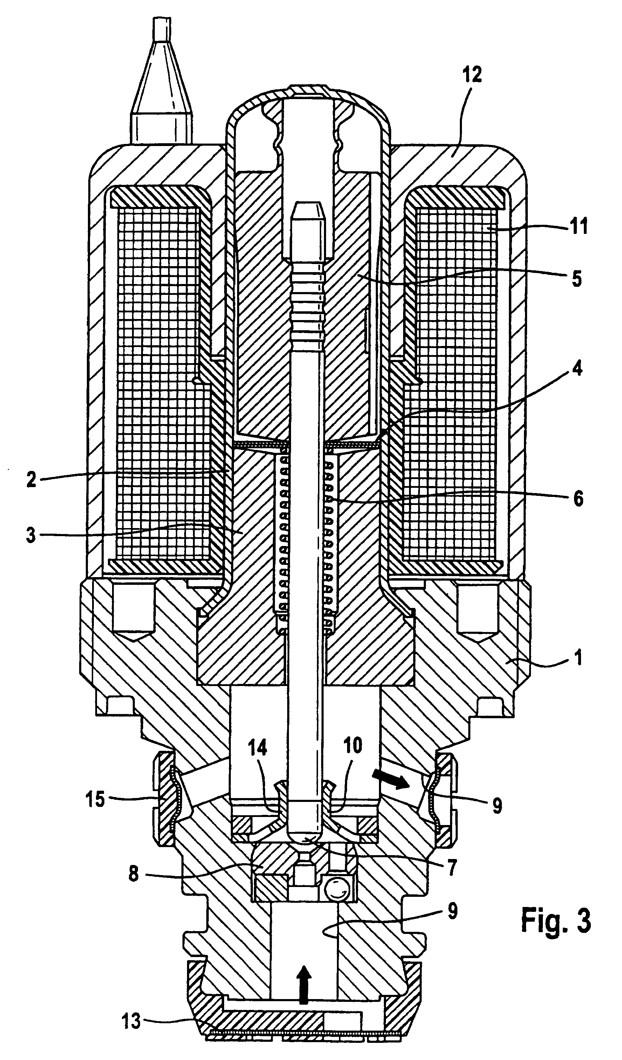

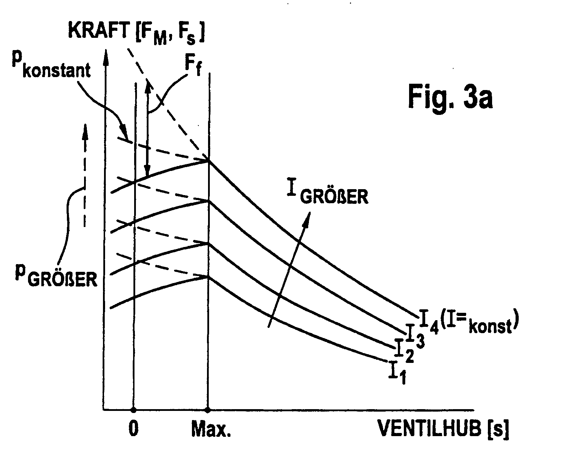

Abweichend von den Darstellungen in den vorangegangenen Figuren ist in der Fig. 3 eine Anwendung des Erfindungsgegenstandes für ein elektromagnetisch nicht erregtes, in Grundstellung geöffnetes Elektromagnetventil gezeigt. Abweichend von dem bereits bekannten Ventilaufbau gemäß Figur 1 befindet sich nunmehr der als Hohlzylinder ausgeführte Magnetkern 3 im unteren Endabschnitt der Ventilhülse 2 eingesetzt, die mit dem Magnetkern 3 im Patronenabschnitt des Ventilgehäuses 1 befestigt ist. Der stößelförmige Abschnitt des Ventilschließgliedes 7 erstreckt sich folglich durch den Magnetkern 3 in Richtung des geschlossenen Bereichs der Ventilhülse 2 bis in den Magnetanker 5, dessen Stirnfläche nunmehr in Richtung auf das beispielhaft gezeigte paar ebene Federelemente 4 konvex geformt ist, während die unter den Federelementen 4 befindliche Stirnfläche des Magnetkerns 3 eine konkave Form aufweist. Eine in der Durchgangsbohrung des Magnetkerns 3 angeordnete Feder 6 mit linearer Kennlinie erstreckt sich durch die Öffnung des Federelementes 4 und hält den Magnetanker 5 in der elektromagnetisch nicht erregten Grundstellung auf Anschlag am Ventildom, so daß das Ventilschließglied 7 einen ungehinderten Druckmitteldurchgang über den Druckmittelkanal 9 herstellt. In dieser Ventilstellung liegen die zu einem Federpaket zusammengefaßten Federelemente 4 leicht vorgespannt an der erhabenen Außenkante der Magnetkernstirnfläche und an der erhabenen Innenkante des Magnetankers 5 an. Wie bereits erwähnt, kann das Federelement 4 aus der Hintereinanderreihung mehrerer einzelner Federscheiben bestehen, die in der elektromagnetisch erregten Ventilschließstellung nur annähernd vollflächig zwischen den Stirnflächen des Magnetankers 5 und dem Magnetkern 3 elastisch zusammengepreßt sind. Bei einem stromlos offenen Elektromagnetventil muss nämlich sichergestellt sein, dass das Ventilschließglied 7 den Ventilsitz 8 in der erregten Magnetankerstellung absolut dicht verschließt, weshalb ein minimaler, vom Magnetanker 5 überbrückbarer Restluftspalt im Bereich des gedrückten Federelementes 4 verbleiben muss. Damit unter Anwendung der erfindungsgemäßen Merkmale das Elektromagnetventil einwandfrei funktionieren kann, erfolgt die Zuströmung und damit die Druckbeaufschlagung des Ventilschließgliedes 7 abbildungsgemäß von unten, d.h. stromaufwärts des Ventilschließgliedes 7 über den den vertikalen Druckmittelkanal 9 abdeckenden Plattenfilter 13 in Richtung auf die Stirnfläche des geöffneten Ventilschließgliedes 7 und damit über den freigegebenen Ringquerschnitt und über die in dem Stößelzentrierkörper 14 gelegenen Durchgangsöffnungen in Richtung der das Ventilgehäuse 1 durchquerenden Druckmittelkanäle 9. Die Abströmung erfolgt somit über einen die quer verlaufenden Druckmittelkanäle 9 abdeckenden Ringfilter 15.

Das für das stromlos offene Elektromagnetventil nach Fig. 3 nunmehr in Fig. 3a abgebildete Diagramm unterscheidet sich lediglich von dem Diagramm nach Fig. 2 durch den Vertausch der Ventilhubgrenzlinien entlang der Abszisse für die jeweils offene und geschlossene Ventilschaltstellung. Die anhand der Fig. 2, 2a und 2b erläuterten Wirkungsweise der Erfindung unterscheidet sich somit in ihren wesentlichen Merkmalen nicht von der beispielhaft gewählten Darstellung in den Fig. 3 und 3a, so dass zur Erläuterung des Diagramms nach Fig. 3a auf die grundlegende Beschreibung der Diagramme nach Fig. 1a und 2 verwiesen werden kann.

Zusammenfassend lässt sich nunmehr für die beschriebenen Beispiele ausführen, dass als wesentliche Merkmale der Erfindung die Verwendung des vorzugsweise plattenförmigen, relativ steifen, den Magnetfluss leitenden Federelements 4 zu beachten ist, das im zunächst nicht erregten Zustand des Magnetankers 5 nur leicht vorgespannt zwischen dem Magnetkern 3 und dem Magnetanker 5 ruht und das mit zunehmenden Ventilhub vom Magnetanker 5 elastisch an die Kontur des Magnetkerns 3 gepreßt wird. Da das vorzugsweise ferritische Federelement 4 für den Magnetkreis kein Hindernis darstellt, wenn das Federelement 4 in der elektromagnetisch erregten Endlage des Magnetankers 5 nahezu vollflächig am Magnetkern 3 anliegt, entspricht quasi der Arbeitshub X gleich dem vom Magnetanker 5 zu überbrückenden Luftspalt, d.h. es existiert nunmehr kein aus dem Stand der Technik bekannter, den Magnetkreis schwächender Restluftspalt. Gleichzeitig übt das Federelement 4 infolge seiner elastischen Vorspannung nach Abschluss der elektromagnetischen Erregung eine Rückstellkraft auf den Magnetanker 5 aus, die dem Restmagnetismus entgegen wirkt und somit das unerwünschte Magnetankerkleben unterbindet.

Durch die Überlagerung der progressiven Kennlinie des Federelements 4 mit der linear verlaufenden Kennlinie der feder 6 ergibt sich die Voraussetzung für einen regelungtechnisch einfachen Betrieb eines ursprünglich bistabilen Elektromagnetventils als Volumenstrom-Regelventil.

### Bezugszeichenliste

- 1: Ventilgehäuse
- 2: Ventilhülse
- 3: Magnetkern
- 4: Federelement
- 5: Magnetanker
- 6: Feder
- 7: Ventilschließglied
- 8: Ventilsitz
- 9: Druckmittelkanal
- 10: Führungshülse
- 11: Ventilspule
- 12: Jochring
- 13: Plattenfilter
- 14: Stößelzentrierkörper
- 15: Ringfilter
- X: Magnetankerhub (Arbeitshub)
- FM: Magnetkraft
- I: Ventilspulenstrom
- s: Ventilhub
- p: Druck
- Fs: Stößelkraft
- Ff: Federkraft

## Patentansprüche

1. Elektromagnetventil, insbesondere für Kraftfahrzeug-Radschlupfregelsysteme, mit einem Ventilgehäuse (1), in dem ein Ventilschließglied (7) beweglich geführt ist, das zur Erzeugung einer Stößelkraft (FS) einem hydraulischen Druck (p) ausgesetzt ist, mit einem am Ventilschließglied (7) angebrachten Magnetanker (5), der in Abhängigkeit von der elektromagnetischen Erregung einer am Ventilgehäuse (1) angebrachte Ventilspule (11) eine Hubbewegung in Richtung eines im Ventilgehäuse (1) angeordneten Magnetkerns (3) vollzieht, wobei ein Federelement (4) der Magnetkraft (FM) des Magnetankers (5) entgegenwirkt, das im elektromagnetisch nicht erregten Zustand durch den Magnetanker (5) vorgespannt ist, und wobei das Federelement (4), das zwischen der Stirnfläche des Magnetankers (5) und der Stirnfläche des Magnetkerns (3) eingespannt ist, einen nicht linearen Kennlinienverlauf aufweist, **dadurch gekennzeichnet, dass** zwischen dem Magnetkern (3) und dem Magnetanker (5) eine Feder (6) mit linearem Kennlinienverlauf vorgesehen ist, die sich durch die Scheibenmitte des als Ringscheibe ausgeführten Federelements (4) erstreckt, wobei die Feder (6) in der elektromagnetisch nicht erregten Ventilstellung den Magnetanker (5) in einem definierten Axialabstand vom Magnetkern (3) positioniert, so dass der Magnetanker (5) vom Magnetkern (3) durch einen Zwischenraum getrennt ist,
und dass die Charakteristik des Federelements (4) derart ausgelegt ist, dass die Magnetkraft (FM) bei Annäherung des Magnetankers (5) an den Magnetkern (3) schneller abnimmt als die aus dem hydraulischen Druck (p) am Ventilschließglied (7) resultierende Stößelkraft (ES), so dass die Kennlinien für die jeweils gewählten Ventilspulenströme (I1-I4) im Bereich des aktiven Ventilhubs (s) degressiv verlaufen.

2. Elektromagnetventil nach Anspruch 1, **dadurch gekennzeichnet, dass** das Federelement (4) einen progressiven Kennlinienverlauf aufwesit.

3. Elektromagnetventil nach Anspruch 1, **dadurch gekennzeichnet, dass** der Magnetkern (3) und der Magnetanker (5) entweder konvex oder konkav geformte, parallele Stirnflächen aufweisen, zwischen denen ein vorzugsweise plattenförmiges Federelement (4) über einen Hebelarm jeweils an den erhabenen Stellen der Stirnflächen anliegt.

4. Elektromagnetventil nach Anspruch 3, **dadurch gekennzeichnet, dass** das Federelement (4) in der elektromagnetisch nicht erregten Ventilschaltstellung mit ihren Profilinnen- und außenkanten an der erhabenen Stirnfläche des Magnetkerns (3) und an der erhabenen Stirnfläche des Magnetankers (5) anliegt.

5. Elektromagnetventil nach Anspruch 1, **dadurch gekennzeichnet, dass** das Federelement (4), die Feder (6), der Magnetkern (3) und der Magnetanker (5) koaxial zur Ventillängsachse ausgerichtet sind.

6. Elektromagnetventil nach einem der vorangegangenen Ansprüche, **dadurch gekennzeichnet, dass** das Federelement (4) aus einem den Magnetfluss leitenden, insbesondere ferritischen Werkstoff besteht.

7. Elektromagnetventil nach Anspruch 1, **dadurch gekennzeichnet, dass** das Federelement (4) aus einer Tellerfeder besteht, die zwischen horizontalen, parallel zuein ander verlaufenden Stirnflächen des Magnetkerns (3) und des Magnetankers (5) angeordnet ist.

## Claims

1. Electromagnet valve, in particular for wheel slip control systems of automotive vehicles, including a valve housing (1) in which a valve closure member (7) is movably guided which is exposed to hydraulic pressure (p) for generating a tappet force (FS), including a magnet armature (5) fitted to the valve closure member (7) and executing a stroke movement in the direction of a magnet core (3) arranged in the valve housing (1) in dependence on the electromagnetic excitation of a valve coil (11) fitted on the valve housing (1), wherein a spring element (4) counteracts the magnet force (FM) of the magnet armature (5) and, in the electromagnetically non-excited position, is biassed by the magnet armature (5), and wherein the spring element (4), being compressed between the end surface of the magnet armature (5) and the end surface of the magnet core (3), has a non-linear course of characteristic curves,
**characterized in that** a spring (6) with a linear course of characteristic curves is arranged between the magnet core (3) and the magnet armature (5) and extends through the center of the spring element (4) that is configured as an annular washer, wherein the spring (6), in the electromagnetically non-excited valve position, positions the magnet armature (5) at a defined axial distance from the magnet core (3) so that the magnet armature (5) is separated from the magnet core (3) by an interspace, and **in that** the characteristics of the spring element (4) is such that when the magnet armature (5) approaches the magnet core (3), the magnet force (FM) decreases more quickly than the tappet force (FS) which results from the hydraulic pressure (p) at the valve closure member (7), with the result that the characteristic curves for the respectively selected valve coil currents (I1-I4) extend degressively in the area of the active valve stroke (s).

2. Electromagnet valve as claimed in claim 1,
**characterized in that** the spring element (4) includes a progressive course of characteristic curves.

3. Electromagnet valve as claimed in claim 1,
**characterized in that** the magnet core (3) and the magnet armature (5) include either convexly or concavely shaped parallel end surfaces, and a preferably plate-shaped spring element (4) respectively abuts on the projecting points of the end surfaces by way of a lever arm.

4. Electromagnet valve as claimed in claim 3,
**characterized in that** the spring element (4), in the electromagnetically non-excited valve switching position, with its profile inside and outside edges abuts on the projecting end surface of the magnet core (3) and the projecting end surface of the magnet armature (5).

5. Electromagnet valve as claimed in claim 1,
**characterized in that** spring element (4), spring (6), magnet core (3), and magnet armature (5) are aligned coaxially relative to the valve's longitudinal axis.

6. Electromagnet valve as claimed in any one of the preceding claims,
**characterized in that** the spring element (4) is composed of a material which conducts the magnetic flux, especially a ferritic material.

7. Electromagnet valve as claimed in claim 1,
**characterized in that** the spring element (4) is a cup spring which is arranged between horizontal end surfaces of the magnet core (3) and the magnet armature (5) that extend in parallel to each other.

## Revendications

1. Soupape électromagnétique, en particulier pour systèmes de régulation du glissement des roues de véhicules automobiles, comportant un boîtier de soupape (1) dans lequel est guidé déplaçable un obturateur de soupape (7) qui est soumis à une pression hydraulique (p) pour produire une force de poussoir (FS), comportant un induit (5) placé sur l'obturateur de soupape (7), qui exécute une course en direction d'un noyau magnétique (3) disposé dans le boîtier de soupape (1), en fonction de l'excitation électromagnétique d'une bobine de soupape (11) placée sur le boîtier de soupape (1), un élément élastique (4), qui est précontraint à l'état non excité électromagnétiquement par l'induit (5), s'opposant à la force magnétique (FM) de l'induit (5), et l'élément élastique (4), qui est serré entre la face frontale de l'induit (5) et la face frontale du noyau magnétique (3), présentant une courbe caractéristique non linéaire, **caractérisée en ce qu'**il est prévu, entre le noyau magnétique (3) et l'induit (5), un ressort (6) de courbe caractéristique linéaire, qui passe par le centre de l'élément élastique (4) réalisé en tant que disque annulaire, le ressort (6), dans la position non excitée électromagnétiquement de la soupape, positionnant l'induit (5) à une distance axiale définie du noyau magnétique (3), de manière que l'induit (5) soit séparé du noyau magnétique (3) par un interstice,
et **en ce que** la caractéristique de l'élément élastique (4) est dimensionnée de manière que la force magnétique (FM) diminue plus rapidement lorsque l'induit magnétique (5) se rapproche du noyau magnétique (3), que la force du poussoir (FS) résultant de la pression hydraulique (p) sur l'obturateur de soupape (7), ce qui fait que les courbes caractéristiques des courants des bobines de soupape (I1-I4) choisis dans chaque cas, s'étendent de manière dégressive dans le domaine de la course de soupape active (s).

2. Soupape électromagnétique selon la revendication 1, **caractérisée en ce que** l'élément élastique (4) présente une courbe caractéristique d'allure progressive.

3. Soupape électromagnétique selon la revendication 1, **caractérisée en ce que** le noyau magnétique (3) et l'induit (5) présentent des faces frontales parallèles, de forme convexe ou concave, entre lesquelles un élément élastique (4), de préférence en forme de plaque, s'applique par un bras de levier, contre les points en relief des faces frontales.

4. Soupape électromagnétique selon la revendication 3, **caractérisée en ce que** l'élément élastique (4), dans la position non excitée électromagnétiquement de la soupape, s'applique, par ses bords profilés intérieurs et extérieurs, contre la face frontale en relief du noyau magnétique (3) et contre la face frontale en relief de l'induit (5).

5. Soupape électromagnétique selon la revendication 1, **caractérisée en ce que** l'élément élastique (4), le ressort (6), le noyau magnétique (3) et l'induit (5) sont orientés coaxialement à l'axe longitudinal de la soupape.

6. Soupape électromagnétique selon l'une des revendications précédentes, **caractérisée en ce que** l'élément élastique (4) est constitué d'un matériau conduisant le flux magnétique, en particulier ferritique.

7. Soupape électromagnétique selon la revendication 1, **caractérisée en ce que** l'élément élastique (4) est constitué d'une rondelle-ressort qui est disposée entre des faces frontales horizontales, parallèles l'une à l'autre du noyau magnétique (3) et de l'induit (5).
